Europäisches Patentamt

European Patent Office

Office européen des brevets

(11) Veröffentlichungsnummer: **0 058 911**
A1

## (12) EUROPÄISCHE PATENTANMELDUNG

(21) Anmeldenummer: 82101117.8

(51) Int. Cl.³: **F 16 F 1/38,** F 16 F 15/08

(22) Anmeldetag: 16.02.82

(30) Priorität: 23.02.81 DE 3106690

(71) Anmelder: **Klöckner-Humboldt-Deutz Aktiengesellschaft, Deutz-Mülheimer-Strasse 111 Postfach 80 05 09, D-5000 Köln 80 (DE)**

(43) Veröffentlichungstag der Anmeldung: 01.09.82 **Patentblatt 82/35**

(84) Benannte Vertragsstaaten: **AT BE CH DE FR GB LI NL SE**

(72) Erfinder: **Jung, Ferdinand, Dürener Strasse 64a, D-5000 Köln 41 (DE)**

(54) **Gummifeder für die elastische Lagerung von Maschinen.**

(57) Gummifeder, die aus Einzelelementen zusammensetzbar ist und durch Austausch der Gummiteile (4, 5) an gegebene Massenverhältnisse von Motor- und Fundament leicht auf eine optimale Dämpfung abgestimmt werden kann.

Klöckner-Humboldt-Deutz AG ⩗ KHD

0058911

5000 Köln 80, den 17. Februar 1981
- 1 - Unser Zeichen: D 81/5 II AE-ZPB So/Rab

## Gummifeder für die elastische Lagerung von Maschinen

Die Erfindung bezieht sich auf eine Gummifeder für die elastische Lagerung von Maschinen, bestehend aus einer mit der Maschine verbundenen Metallkonsole, die ein Gummielement, mit einer Außenform ähnlich einem Rotationshyperboloid mit pilzförmigen Vergrößerungen an den Stirnseiten und einer axialen Längsbohrung an seiner Einschnürungsstelle am Umfang ringartig umschließt, wobei die beiden Stirnflächen des Gummielementes durch eine zentrale Schraube über Scheiben axial verspannt und mit dem Fundament oder einem Fahrgestell verbunden sind und die axiale Verspannung mittels der zentralen Schraube durch ein Metallrohr in der Längsbohrung des Gummielements durch die Länge des Rohres begrenzt ist.

Die Aufstellung von Maschinen, von denen starke Schwingungen ausgehen, wie z. B. Kolbenmaschinen, erfordert eine Lagerung, die die Schwingungen dämpft oder völlig absorbiert und das Fundament nur wenig zu Schwingungen anregt. Hierbei werden in bekannter Weise Gummi-Metallelemente als Dämpfer verwendet, wie sie von der einschlägigen Industrie angeboten werden. Die Formen der Dämpfungselemente sind bekannt. Es handelt sich meistens um Gummi-Metallteile, die als Schienen, runde Kissen oder Hülsen und ähnliche Formen je nach vorherrschender Belastungsrichtung und Verwendungszweck ausgebildet sind.

./..

Da bei einem Kolbenmotor die schwingende Masse und
seine Erregerfrequenz vorgegeben sind und andererseits auch das Fundament mit seiner Masse oder das
Fahrgestell oder das Gerät, in das der Motor eingebaut
werden soll, ebenfalls mit seiner Masse vorgegeben ist,
muß durch die Auswahl geeigneter Dämpfungselemente die
auftretende Schwingung beherrscht werden.

Damit bleibt die Forderung nach weitgehender Dämpfung
allein auf die Formgebung des Gummielementes und die
Auswahl der Gummihärte bzw. Elastizität beschränkt.
Die notwendige Anpassung und Auswahl einer geeigneten
Motoraufhängung ist somit für jeden Einbaufall des
Motors erneut durchzuführen, was erfahrungsgemäß zu
einer Vielzahl von Gummi-Elementformen führt, die für
alle möglichen Einbaufälle bereitgehalten werden müssen.
Darüberhinaus muß die Vielzahl angewendeter Varianten von
Gummi-Elementen als Ersatzteile bevorratet werden, was
aufwendig und kostspielig ist.

Es ist eine Motoraufhängung bekannt (SAE-paper 700028
Jan. 1970), bei der eine Metallkonsole am Motor befestigt ist, die ein Gummielement mit einer Außenform
ähnlich einem Rotationshyperboloid mit pilzförmigen
Vergrößerungen an den Stirnseiten an seiner Einschnürungsstelle am Umfang ringartig umschließt. Das Gummielement
hat eine mittige Längsbohrung, in die ein Metallrohr
eingesetzt ist. Von einer zentral angeordneten Schraube
wird über zwei großflächige Scheiben das Gummielement
mit der Fundamentauflagefläche axial verspannt. Durch die
Länge des Metallrohres wird die Verspannung begrenzt,
so daß sich bei fest angezogener Schraube und auf dem

./..

Metallrohr aufliegenden Scheiben stets die gleiche Verspannung des Gummielementes ergibt. Die Anpassung an die verschiedensten Einbaufälle erfolgt wie bei den meisten bekannten Gummifedern durch die Verwendung unterschiedlicher Gummihärten und unterschiedlicher Druckvorspannung.

Für die Anpassung an die verschiedenen Einbaubedingungen ist jedoch der Spielraum, den die Härteskala von Gummi ermöglicht, sehr eng, weil sich sehr harte Gummisorten nicht mehr durch die enge ringförmige Öffnung der Metallkonsole in die vorgesehene Lage bringen lassen. Die bekannte Motoraufhängung wird nämlich nach einem Verfahren, das als Betriebsgeheimnis gilt, zusammengebaut; das Gummielement ist nicht wie bei anderen Gummi-Metallverbindungen, einvulkanisiert sondern eingepreßt. Dieses hat zwar den Vorteil, daß das Gummielement im Herstellerwerk ausgetauscht und auch erneuert werden kann. Ein Austausch am Einsatzort, wodurch die Auswahl einer geeigneten Gummihärte eine Anpassung vorgenommen werden muß, ist nicht möglich, weil keine Vorrichtung zum Einbringen des Gummielementes in die Metallkonsole vorhanden ist. Zur Anpassung bleibt jedoch noch die Änderung der Vorspannung durch die zentrale Schraube. In diesem Falle wird das Metallrohr in der Längsbohrung des Gummielements durch Beilageringe verlängert, so daß das Gummipaket weniger zusammengepreßt wird.

Der Erfindung liegt die Aufgabe zugrunde, eine Motoraufhängung zu schaffen, die an die verschiedensten Massenverhältnisse von Motor und Fundament mit den

./..

unterschiedlichsten Schwingungsfrequenzen und Amplituden bei gleichzeitigem Auftreten von Seitenkräften
am Aufstellungsort noch leicht angepaßt werden kann,
ohne daß jeweils die ganze Motoraufhängung ausgetauscht
werden muß.

Dieses wird bei einer Gummifeder der eingangs genannten
Art dadurch gelöst, daß das Gummielement aus zwei
ringförmigen Teilelementen besteht, die beiderseits der
als flache Lagerplatte mit Lagermulden ausgebildeten
Konsole angeordnet sind, wobei das Paket der Gummielemente
mit der Konsole mittels zweier pilzförmiger Scheiben und
einer zentralen Schraube verspannt sind.

Mit dieser erfindungsgemäßen Konstruktion läßt sich durch
den alleinigen Austausch der ringförmigen Gummielemente
nicht nur jede mögliche Gummihärte anwenden, sondern
durch die änderbare Einstellung der Vorspannung das
Anwendungsgebiet noch ausweiten. Der große Vorteil liegt
in der einfachen und schnellen Austauschbarkeit am Einsatzort. Es wird möglich durch Messen und Erproben verschiedener Gummielemente, die für den betreffenden Fall
optimale Lösung schnell aufzufinden. Die Endlage der
pilzförmigen Scheiben, die die Vorspannung begrenzt,
kann dabei durch verschieden dicke Beilageringe verändert
werden.

Eine andere Möglichkeit, die Vorspannung zu verändern,
ergibt sich dadurch, daß die rohrartigen Enden der pilzförmigen Scheiben miteinander einstellbar verschraubt
sind. Diese Art der Begrenzung der Vorspannung erlaubt
im Gegensatz zu den Beilageringen eine stufenlose Verstellung.

./..

Um durch die Formgebung der Gummielemente in möglichst
vielen Anwendungsfällen eine wirkungsvolle Dämpfung
zu erzielen wird vorgeschlagen, daß die ringförmigen
Gummielemente eine kegelstumpfförmige Außenform und
eine kegelstumpfförmige Bohrung haben, womit sich ein
Profil ähnlich einem Rhombus bis Rhomboids ergibt.
Dabei ist für besonderes schwere Belastungen die gedrungene und massive Form des rhombusförmigen Profils
vorgesehen. Weichere Federungen, die auch in der Lage
sind, Seitenkräfte aufzunehmen, ergeben sich durch
schlankere rhomboidförmige Profile, die durch geeignete
Wahl ihrer Höhe noch weiter in ihren Federungs- und
Dämpfungseigenschaften variiert werden können.

Um eine gewisse Einspannung und Lagefixierung der
Gummielemente zu erreichen, wird vorgeschlagen, daß
die kegelige Außenform der Gummielemente zum größeren
Durchmesser hin in eine zylindrische Form übergeht und
in der Gummimulde zentriert ist, und daß die kegelige Innenform der Gummielemente zu ihrem kleinsten Durchmesser
hin in eine zylindrische Bohrung übergeht und vom Schaft
der pilzförmigen Scheiben zentriert ist. Ohne den
zylindrischen Übergang ist eine Zentrierung durch den
kleinsten bzw. größten Durchmesser ebenso möglich.

Zur Ausweitung des Anwendungsgebietes, wobei durch geeignete Formgebung wahlweise mehr Seitenkräfte aufgenommen werden können oder eine größere Progessivität oder
größere Steifigkeit gefordert werden, wird vorgeschlagen,
daß die ringförmigen Gummielemente etwa kreisförmiges
oder elliptisches oder quadratisches oder rechteckiges
oder trapezförmiges Profil haben.

./..

Um die Lagermulden entsprechend der Verformung der
Gummielemente auszubilden, wird vorgeschlagen, daß
die Lagermulden wenig größer als die Außenform der
Gummielemente sind und ihre Form der Verformung der
Gummielemente unter Last angepaßt sind.

Da bei der Motorabstützung das Gewicht des Motors
bereits eine beträchtliche Vorspannung für das untere
Gummielement ergibt, wird vorgeschlagen, daß die Gummielemente ungleiche Höhen haben und das Element mit
der größeren Höhe an der Unterseite der Metallkonsole
angeordnet ist. Hierdurch ergibt sich im Vergleich
zum schwächer dimensionierten oberen Gummielement ein
Ausgleich, bei dem gleiche Federeigenschaften angestrebt
werden.

In den Zeichnungen sind Ausführungsbeispiele der Erfindung
schematisch dargestellt.

Die Abb. 1 zeigt einen Längsmittelschnitt durch eine
Gummifeder,

Abb. 2 zeigt einen Längsmittelschnitt durch eine
Gummifeder,

Abb. 3 bis 5 zeigen Ausführungsformen verschiedener
Gummielemente.

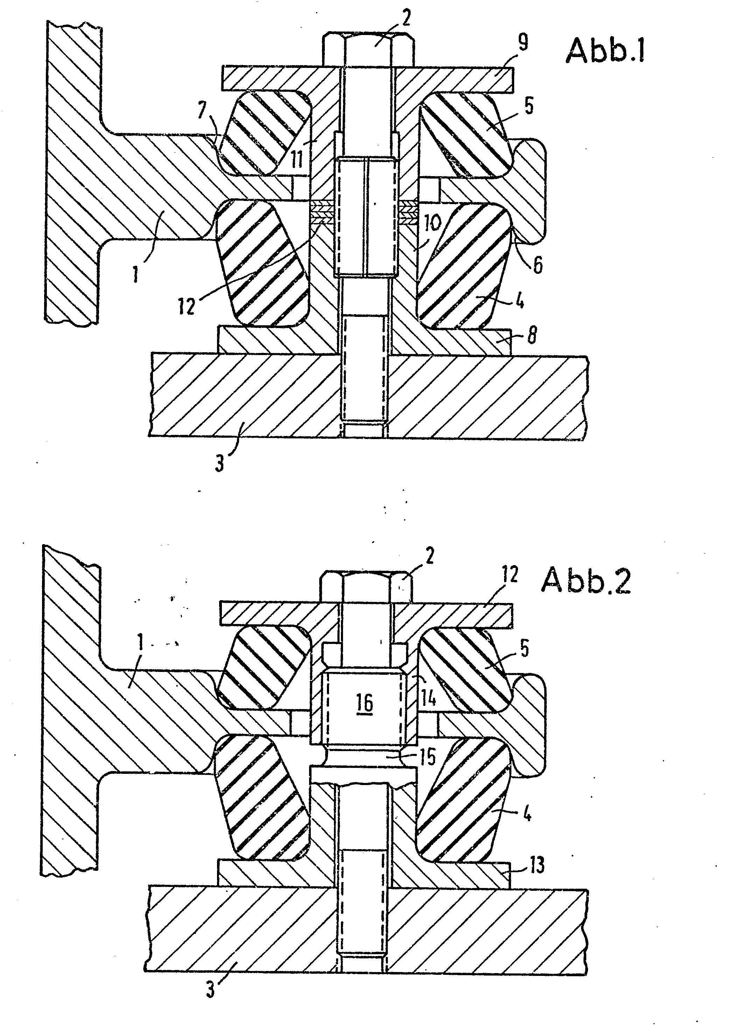

In Abb. 1 ist eine Gummifeder, die mit einer Metallkonsole
1 an einer nicht näher dargestellten Maschine befestigt
ist und mittels einer Schraube 2 an einem nicht näher

./..

dargestellten Fundament 3 befestigt ist, dargestellt.
Die beiden ringförmigen Gummielemente 4, 5 lagern
in kreisrunden muldenförmigen Ausnehmungen 6, 7 der
Metallkonsole 1 und werden über zwei pilzförmige
Scheiben 8, 9 mittels der Schraube 2 gegen das Fundament 3 verspannt. Die Verspannung wird durch das Aneinanderstoßen der pilzförmigen Scheiben 8, 9 an deren
Hohlzapfen 10, 11 begrenzt. Zur genauen Einstellung
der Begrenzung bzw. der Vorspannung dienen ringförmige
Beilagescheiben 12, die bei Bedarf verwendet werden.
Zur axialen Führung der pilzförmigen Scheiben 8, 9
dient eine rohrartige geschlitzte Leichtspannhülse
nach DIN. Die Gummielemente 4, 5 zentrieren sich mit
ihren Außendurchmessern einerseits in den muldenförmigen Ausnehmungen 6, 7 und andererseits mit ihrem
Innendurchmesser an den Hohlzapfen 10, 11. Die Form der
muldenförmigen Ausnehmungen 6, 7 ist so ausgebildet,
daß sie in etwa der Verformung der Gummielemente 4, 5
entspricht und von diesen bei der Vorspannung und Belastung mehr und mehr ausgefüllt wird, wodurch eine
Progression der Federung erreicht wird.

In Abb. 2 ist eine ähnliche Ausführungsform wie in Abb.
1 dargestellt. Die pilzförmigen Scheiben 12, 13 haben an
ihren Zapfen 14, 15 eine Verschraubung 16, mittels derer
die pilzförmigen Scheiben verbunden sind und die Gummielemente 4, 5 mit der Metallkonsole 1 durch Anziehen aufeinanderpressen. Auf diese Weise wird eine stufenlose
Einstellung der Vorspannung erreicht. Mittels der Schraube
2 wird die vorher vorgespannte Gummifeder auf dem
Fundament 3 befes_tigt.

                                        ./..

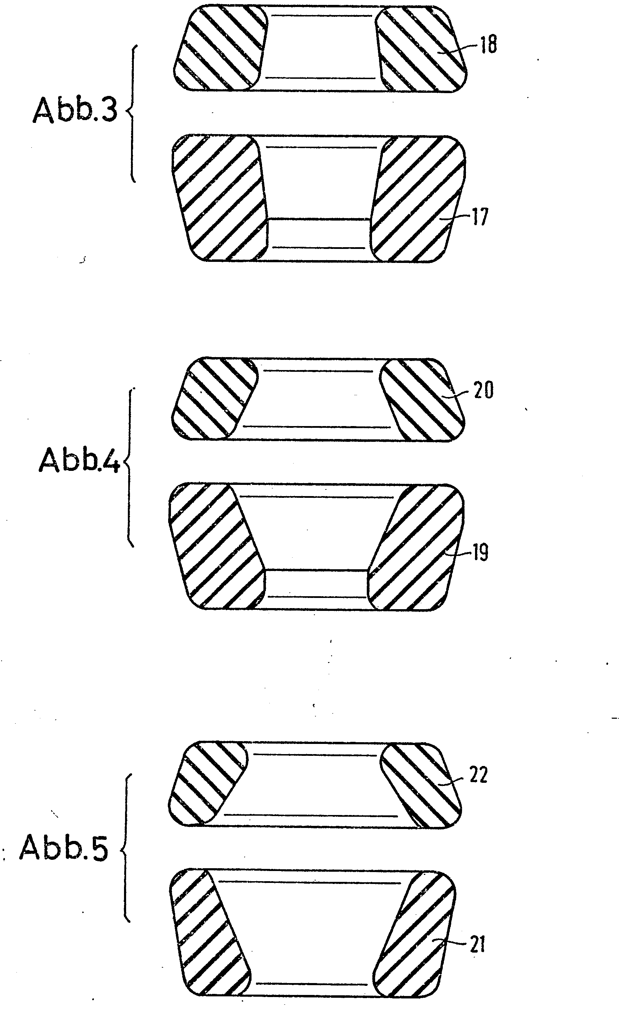

In Abb. 3 sind zwei zusammengehörige Gummielemente
17, 18 im Längsmittelschnitt in Einbaustellung dargestellt. Das Profil entspricht angenähert dem eines
Rhombus. Es ist sehr massiv gestaltet und für große
Kräfte, die in Achsrichtung wirken, ausgelegt. Das
größere und höhere Gummielement ist für die Anordnung
unterhalb der Metallkonsole 1 vorgesehen, weil es
außer den dynamischen Kräften noch die Auflagerlast
aufnehmen muß. Die kleinsten Innendurchmesser der
kegelstumpfförmigen Bohrungen zentrieren die Gummielemente 4, 5 auf den Hohlzapfen 10, 11, Abb. 1. Die
größten Außendruchmesser der kegelstumpfförmigen
Gummielemente 4 , 5 , zentrieren diese in den muldenförmigen Ausnehmungen 6, 7, Abb. 1.

In Abb. 4 sind zwei zusammengehörige Gummielemente 19 ,
20 im Längsmittelschnitt in Einbaustellung dargestellt.
Das Profil geht besonders bei dem unteren Gummielement
20 in die Form eines Rhomboids über. Diese gegenüber der
Abb. 3 etwas schlankere Form ist für weniger hohe Kräfte
in axialer Richtung ausgelegt, aber zugleich geeignet
für die Aufnahme von Seitenkräften.

In Abb. 5 sind zwei zusammengehörige Gummielemente 21,
22 im Längsmittelschnitt in Einbaustellung dargestellt.
Die Profile haben gegenüber Abb. 3 und 4 noch mehr eine
schlankere Rhomboidform angenommen. Diese sehr elastische
Form ist noch mehr für die Aufnahme von Seitenkräften
geeignet.

Humboldt-Deutz AG ⋀KHD

5000 Köln 80, den 17. Februar 1981
Unser Zeichen: D 81/5 II AE-ZPB So/Rab

0058911

-9-

P a t e n t a n s p r ü c h e
--------------------------------------------

1. Gummifeder für die elastische Lagerung von
Maschinen, bestehend aus einer mit der Maschine verbundenen Metallkonsole, die ein Gummielement mit
einer Außenform ähnlich einem Rotationshyperboloid
mit pilzförmigen Vergrößerungen an den Stirnseiten
und einer axialen Längsbohrung an seiner Einschnürungsstelle am Umfang ringartig umschließt, wobei die
beiden Stirnflächen des Gummielements durch eine
zentrale Schraube über Scheiben axial verspannt und
mit dem Fundament oder einem Fahrgestell verbunden
sind und die axiale Verspannung mittels der zentralen
Schraube durch ein Metallrohr in der Längsbohrung des
Gummielements durch die Länge des Rohres begrenzt ist,
dadurch gekennzeichnet, daß das Gummielement aus zwei
ringförmigen Teilelementen besteht, die beiderseits
der als flache Lagerplatte mit Lagermulden ausgebildeten Konsole angeordnet sind und das Paket der
Gummielemente mit der Konsole mittels zweier pilzförmiger Scheiben und einer zentralen Schraube verspannt sind.

2. Gummifeder nach Anspruch 1,
dadurch gekennzeichnet, daß die rohrartigen Enden der pilzförmigen Scheiben beim Verspannen in der Endlage aufeinanderstoßen und durch Beilageringe verlängerbar sind.

./..

3.      Gummifeder nach Anspruch 1,
dadurch gekennzeichnet, daß die rohrartigen Enden der
pilzförmigen Scheiben miteinander einstellbar verschraubt sind.


4.      Gummifeder nach einem der Ansprüche 1 bis 3,
dadurch gekennzeichnet, daß die ringförmigen Gummielemente eine kegelstumpfförmige Außenform und eine
kegelstumpfförmige Bohrung haben, womit sich ein
Profil ähnlich einem Rombus  bis Romboid ergibt.


5.      Gummifeder nach einem der Ansprüche 1 bis 4,
dadurch gekennzeichnet, daß die kegelige Außenform
der Gummielemente zum größeren Durchmesser hin in
eine zylindrische Form übergeht und in der Lagermulde
zentriert ist.


6.      Gummifeder nach einem der Ansprüche 1 bis 5,
dadurch gekennzeichnet, daß die kegelige Innenform
der Gummielemente zu ihrem kleinsten Durchmesser hin
in eine zylindrische Bohrung übergeht und vom Schaft
der pilzförmigen Scheiben zentriert ist.


7.      Gummifeder nach einem der Ansprüche 1 bis 3
und 5 bis 6,
dadurch gekennzeichnet, daß die ringförmigen Gummielemente etwa ein kreisförmiges oder elliptisches oder
quadratisches oder rechteckiges oder trapezförmiges
Profil haben.


8.      Gummifeder nach einem der Ansprüche 1 bis 7,
dadurch gekennzeichnet, daß die Lagermulden wenig größer
als die Außenform der Gummielemente sind und ihre Form

.../..

00589 11
17.02.1981
D 81/5 II

der Verformung der Gummielemente unter Last angepaßt
sind.

9.      Gummifeder nach einem der Ansprüche 1 bis 8,
dadurch gekennzeichnet, daß die Gummielemente ungleiche
Höhen haben und das Element mit der größeren Höhe an
der Unterseite der Metallkonsole angeordnet ist.

-1/2-    0058911

Abb.1

Abb.2

KÖLN-DEUTZ    D 81/5 II

0058911

Abb.3

18

17

Abb.4

20

19

Abb.5

22

21

D 81/ 5 II

# 0058911

Nummer der Anmeldung

EP 82 10 1117

## Europäisches Patentamt

## EUROPÄISCHER RECHERCHENBERICHT

### EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| X | US - A - 2 538 954 (P.C. EFROMSON et al.) <br><br> * Spalte 5, Zeile 53 - Spalte 6, Zeile 28; Figuren 3,4,14,15 * | 1,2, 4-8 |
| X | DE - A - 2 803 743 (GENERAL ELECTRIC CO.) <br><br> * das ganze Dokument * | 1,4,7 |
| X | US - A - 2 932 507 (G.H. MULLER et al.) <br><br> * Spalte 2, Zeilen 5-67 * | 1,4,7 |
| A | GB - A - 586 608 (J.W. LA FRENCH NORMAN) <br><br> * das ganze Dokument * | 1 |
| A | FR - E - 85 786/FR - A - 1 309 708 (S.A.G.A.) <br><br> * Seite 2, Spalte 1, Zeilen 16-34 * | 1 |
| A | FR - A - 2 351 319 (DEERE & CO.) | |
| A | FR - A - 1 224 714 (SILENTBLOC LTD.) | |
| A | FR - A - 926 842 (L. THIRY) | |

**KLASSIFIKATION DER ANMELDUNG** (Int. Cl.³)

F 16 F  1/38
15/08

**RECHERCHIERTE SACHGEBIETE** (Int. Cl.³)

F 16 F

**KATEGORIE DER GENANNTEN DOKUMENTE**

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde liegende Theorien oder Grundsätze
E: älteres Patentdokument, das jedoch erst am oder nach dem Anmeldedatum veröffentlicht worden ist
D: in der Anmeldung angeführtes Dokument
L: aus andern Gründen angeführtes Dokument

&: Mitglied der gleichen Patentfamilie, übereinstimmendes Dokument

| X | Der vorliegende Recherchenbericht wurde für alle Patentansprüche erstellt. |
|---|---|

| Recherchenort | Abschlußdatum der Recherche | Prüfer |
|---|---|---|
| Den Haag | 28-04-1982 | CINQUANTINI |

EPA form 1503.1   06.78